# EUROPEAN PATENT SPECIFICATION

(11) **EP 4 392 201 B1**
(45) Date of publication and mention of the grant of the patent: **04.11.2026**
(21) Application number: 22862024.1
(22) Date of filing: 24.08.2022
(51) Int. Cl.: B23K 26/361, B23K 10/00, B23K 37/02, B24C 1/04, B26D 3/02, B26F 3/00, B23K 26/38

(54) **COMPUTER-IMPLEMENTED METHOD FOR SHAPING AN EDGE OF A PART TO BE CUT FROM A WORKPIECE USING A PLASMA ARC TORCH SYSTEM**
COMPUTERIMPLEMENTIERTES VERFAHREN ZUR FORMGEBUNG EINER KANTE EINES AUS EINEM WERKSTÜCK ZU SCHNEIDENDEN TEILS UNTER VERWENDUNG EINES PLASMABRENNERSYSTEMS
PROCÉDÉ MIS EN OEUVRE PAR ORDINATEUR POUR LE FAÇONNAGE D'UN BORD D'UNE PIÈCE À DÉCOUPER DANS UNE PIÈCE BRUTE À L'AIDE D'UN SYSTÈME DE TORCHE À ARC PLASMA

(30) Priority: 25.08.2021 US 202163237009 P
(43) Date of publication of application: 03.07.2024
(73) Proprietor: Hypertherm, Inc., Hanover, NH 03755 (US)
(72) Inventor: ZHANG, Yu, Hanover, New Hampshire 03755 (US); MOODY, Steven, Hanover, New Hampshire 03755 (US)
(74) Representative: Barker Brettell LLP
(86) International application number: PCT/US2022/041345
(87) International publication number: WO 2023/028125

(56) References cited:
- EP-A2- 2 621 869
- JP-A- 2015 074 026
- JP-A- 2018 062 003
- JP-A- H0 947 877
- JP-B2- 5 846 760
- US-A1- 2009 240 368
- US-A1- 2018 044 219
- US-A1- 2020 156 170

## Description

The present invention generally relates to systems and methods for shaping an edge of a part to be cut from a workpiece using a material processing system, and more particularly to a computer implemented method for shaping an edge of a part to be cut from a workpiece using a plasma arc torch system., see claim 1.

### BACKGROUND

Material processing systems, including plasma arc torch systems, laser processing systems, and liquid jet processing systems, are widely used for processing (e.g., heating, cutting, gouging and marking) of materials (e.g., conductive materials, such as metals). These material processing systems comprise various consumable components, including a processing head for delivering a processing stream to a workpiece to process the workpiece. For example, a plasma arc torch system generally includes a processing head comprising a plasma arc torch head, an electrode mounted within the torch head, an emitter disposed within a bore of the electrode, a nozzle with a central exit orifice mounted within the torch head, a shield, electrical connections, passages for cooling, passages for arc control fluids (e.g., plasma gas) and a power supply. A swirl ring can be used to control fluid flow patterns in the plasma chamber formed between the electrode and the nozzle. In operation, the plasma arc torch produces a processing stream comprising a plasma arc, which is a constricted jet of an ionized gas with high temperature and sufficient momentum, to assist with removal of molten metal. Gases used in the torch can be non-reactive (e.g., argon or nitrogen), or reactive (e.g., oxygen or air). Other types of material processing systems, such as water jet processing systems or laser processing systems, also include various consumable components that are used to operate their respective processing devices. These consumables include processing heads (e.g., waterjet cutting heads or laser cutting heads) for delivering processing streams (e.g., water jet streams or laser streams) to process workpieces.

These material processing systems are frequently used to cut flat plates, I-Beams and pipes in preparation for welding and assembly into complex machines and structures. Popular welding techniques often require beveled edges (i.e., sloping, non-90 degree edges) on parts to be joined to achieve a strong weld. Traditionally, to achieve a beveled shape on the edge of a part, material processing systems use multi-axis bevel torches and/or a significant amount of secondary work (e.g., grinding by an end user). However, a multi-axis bevel torch is expensive, complex in design and complicated to operate/maneuver about the part to achieve the desired bevel shape. In addition, secondary work used to achieve the desired shape is typically inefficient. These inefficiencies of secondary work and expenses involved in employing complex cutting components limit the usage of traditional material processing systems (e.g., plasma or laser cutting systems) in developing weldable parts. Further, for a part to be painted, a right-angled (i.e., 90 degree) edge on the part is difficult to paint and often serves as a failure/chip point for the paint on the finished product. Thus, edge chamfering (i.e., cutting away a portion of a right-angled edge of a part to achieve a rounded sloping edge) may be required for more easily paintable parts. Currently, operators grind the right-angled edge of a part to achieve a paintable chamfered edge, which again results in inefficiencies and additional material handling requirements as well as additional human manipulation.

Therefore, there is a need for systems and methods capable of achieving bevel and/or chamfer shapes in part edges without necessitating secondary work and/or complex processing components.

JP2015074026A (disclosing the preamble of claim 1) relates to a plasma cutting device which includes a plasma torch, torch attitude control means for inclining the plasma torch, and torch position control means for moving the plasma torch is configured such that: the plasma torch is moved while ejecting plasma gas; a route surface is formed on the right side of the proceeding direction, when a revolution flow of the plasma gas is right revolution; the plasma torch is inclined to a material to be processed and is moved while ejecting the plasma gas; and a beveling surface is formed on the left side of the proceeding direction.

US2020156170A1 discloses a method for determining operating parameters to process a workpiece using a manufacturing processing system including a plasma arc gouging torch. The method includes positioning a plasma arc gouging torch at a location relative to a workpiece and determining a start point and an end point for each gouging path based on the location and a gouge profile. The method further includes using the gouging profile to determine first operating parameters for the plasma arc gouging torch for a first gouging path and determining second operating parameters for the plasma arc gouging torch for a second gouging path based on the gouge profile and the first gouging path. The second operating parameters include at least one of a second torch speed or a torch offset. The method also includes using at least one of the first or second operating parameters to process the workpiece with the plasma arc gouging torch.

JPH0947877A discloses a primary gas is injected from an orifice of plasma torch and arc is formed between an electrode and work. A swirler is arranged in a secondary gas passage and a speed vector of >0 deg. to < 45 deg. is given to the secondary gas injected from the orifice.

### SUMMARY

The present invention provides a computer-implemented method for shaping an edge of a part to be cut from a workpiece using a plasma arc torch system according to claim 1.

Optional features are defined in the dependent claims.

The present invention provides a method for achieving beveled and chamfered edges on a part of a workpiece using existing material processing systems, such as plasma arc systems and laser systems. In some embodiments, a simple X-Y cutting table in conjunction with controlled adjustment of processing head motion, operation and/or process settings are used to obtain consistent bevel cuts and/or chamfer cuts, without any usage of complex cutting components (e.g., articulated or bevel bench, robotic manipulation, etc.) or secondary work.

In one aspect, the present invention features a computer-implemented method for shaping an edge of a part to be cut from a workpiece using a material processing system according to claim 1, comprising inter alia a processing head configured to deliver a processing stream. The method includes calculating, by the material processing system, a start point and an end point of a shaping path proximate to the edge of the part based on a desired edge profile and calculating, by the material processing system, a start point and an end point of a shaping path proximate to the edge of the part based on a desired edge profile. The method also includes determining, by the material processing system, a set of operating parameters to controllably impinge the processing stream about the edge of the part to execute the shaping path from the start point to the end point. The set of operating parameters includes at least one of a height of the processing head relative to the part, an energy density of the processing stream, a speed of the processing head along the shaping path, an offset of the shaping path relative to the edge of the part, and a pressure of the processing stream. The method further includes positioning, by the material processing system, the processing head normal to a surface of the part and controllably impinging the processing stream at the edge of the part, by the processing head, to shape the desired edge profile.

In another aspect not covered by the present invention, a material processing system is provided for shaping an edge of a part to be cut from a workpiece. The material processing system includes means for generating a processing stream and delivering the processing stream to the workpiece and means for calculating a start point and an end point of a shaping path proximate to the edge of the part based on a desired edge profile. The material processing system also includes means for determining a set of operating parameters to controllably impinge the processing stream about the edge of the part to execute the shaping path from the start point to the end point. The set of operating parameters includes at least one of a height of the processing head relative to the part, an energy density of the processing stream, a speed of the processing head along the shaping path, an offset of the shaping path relative to the edge of the part and a pressure of the processing stream. The material processing system further includes means for positioning the means for delivering the processing stream such that the means for delivering the processing stream is normal to a surface of the part and means for controllably impinging the processing stream at the edge of the part to shape the desired edge profile.

### BRIEF DESCRIPTION OF THE DRAWINGS

The advantages of the invention described above, together with further advantages, may be better understood by referring to the following description taken in conjunction with the accompanying drawings. The drawings are not necessarily to scale, emphasis instead generally being placed upon illustrating the principles of the invention.
FIG. 1 shows an exemplary material processing system for shaping an edge of a part to be cut from a workpiece, according to some embodiments of the present invention.
FIG. 2 shows an exemplary computerized process for shaping an edge of the part to be cut from the workpiece using the material processing system of FIG. 1, according to some embodiments of the invention.
FIGS. 3a and 3b show diagrams visualizing cutting and shaping of a part from a workpiece by a plasma arc torch system in a first pass and a second pass, respectively, using the process of FIG. 2 to produce a chamfered edge, according to some embodiments of the present invention.
FIG. 4 shows a diagram visualizing shaping an edge of a part by a plasma arc torch system using the process 200 of FIG. 2 to produce a beveled edge, according to some embodiments of the present invention.
FIG. 5 shows an exemplary part shaped using the process of FIG. 2 to produce a beveled edge, according to some embodiments of the present invention.
FIG. 6 shows an exemplary part shaped using the process of FIG. 2 to produce a chamfered edge, according to some embodiments of the present invention.
FIG. 7 shows an exemplary V-bevel profile processed by a plasma arc torch system on a workpiece, according to some embodiments of the present invention.
FIG. 8 shows an exemplary U-bevel profile processed by a plasma arc torch system on a workpiece, according to some embodiments of the present invention.
FIG. 9 shows an exemplary computerized process, adapted from the computerized process of FIG. 2, for shaping an edge of a part to be cut from a workpiece using a laser cutting system, according to some embodiments of the invention.

### DETAILED DESCRIPTION

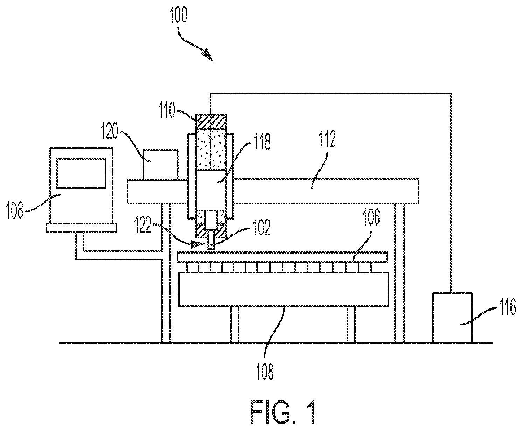

FIG. 1 shows an exemplary material processing system 100 for shaping an edge of a part to be cut from a workpiece 106, according to some embodiments of the present invention. As shown, the system 100 generally includes a processing head 102 in electrical communication with a processor 108, which can be a digital signal processor (DSP), microprocessor, microcontroller, computer, computer numeric controller (CNC) machine tool, programmable logic controller (PLC), application-specific integrated circuit (ASIC), or the like. The processing head 102 is configured to generate and deliver a processing stream to the workpiece 106 to (i) cut the part from the workpiece 106 and/or (ii) shape an edge of the part after it is detached from the workpiece 106. In some embodiments, the material processing system 100 is a plasma arc torch system, in which case the processing head 102 is a plasma torch head configured to generate and deliver a plasma arc to the workpiece 106 to perform the cutting and/or edge shaping. In some embodiments, the material processing system 100 is a laser processing system, in which case the processing head 102 is a thermal processing head configured to generate and deliver a laser stream to the workpiece 106 to perform the cutting and/or edge shaping. In some embodiments, the material processing system is a liquid jet system, in which case the processing head 102 is a liquid jet head configured to generate and deliver a stream of liquid to the workpiece 106 to perform the cutting and/or edge shaping.

In an exemplary arrangement of the material processing system 100 as shown in FIG. 1, the workpiece 106 is placed on a cutting table 108 (e.g., a X-Y cutting table), and the processing head 102 is mounted into a height controller 110, which is attached to a gantry 112 such that a distal tip 122 of the processing head 102 is positioned above the workpiece 106. The processor 108 is configured to interact with various system modules of the material processing system 100 to control the motion of the processing head 102 relative the workpiece 106 while directing the processing stream from the processing head 102 along a shaping path on the workpiece 106. The system 100 also includes a power supply 116 configured to interact with various system modules to control the current, voltage and/or power supplied to the processing head 102 for processing the workpiece 106. In some embodiments, the processor 108 and the power supply 116 are integrated into one component. Alternatively, they are separate components as illustrated in FIG. 1.

In general, the processor 108 and/or the power supply 116 are configured to control and optimize the operation of the processing head 102 relative to the workpiece 106 by regulating many system functions that include, but are not limited to, start sequence, CNC interface functions, gas and operating parameters, and shut off sequences. For example, the processor 108 and/or the power supply 116 control various system modules including (i) a gas controller 118 for controlling one or more gases (e.g., shield and/or plasma gases for a plasma arc torch system) supplied to the processing head 102, (ii) a driver system 120 for adjusting the lateral movement of the processing head 102 in relation to the surface of the workpiece 106, (iii) the height controller 110 for adjusting the vertical height between the processing head 102 and the workpiece 106 and (iv) nesting software (not shown) for providing a suitable program that sets desired parameters for processing the workpiece 106 to achieve desired cutting and/or shaping results.

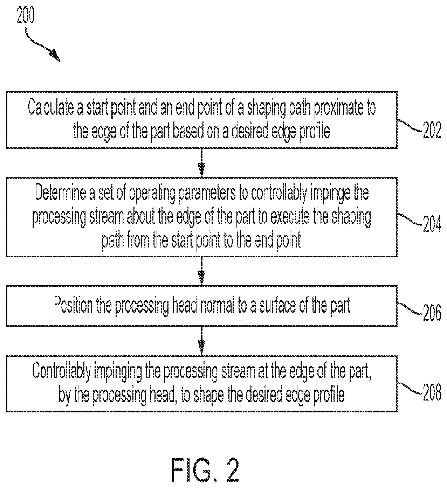

FIG. 2 shows an exemplary computerized process 200 for shaping an edge of a part to be cut from a workpiece 106 using the material processing system 100 of FIG. 1, according to some embodiments of the invention. The material processing system 100 can shape an edge of the part cut from the workpiece 106 to achieve a user desired profile at the edge of the part, such as a beveled edge profile, a scooped/rounded edge profile or a chamfered edge profile. As an example, a material processing system 100 can apply the process 200 to a workpiece 106 that is a plate of steel about 9.52 mm (3/8 inch) thick to cut and/or shape a part from the workpiece 106 with a beveled edge of about 60 degrees.

As shown in FIG. 2, the process 200 starts at step 202 with the material processing system 100 (e.g., the processor 108 and/or the power supply 116 of the material processing system 100) calculating a start point and an end point of a shaping path proximate to the edge of the part to achieve a desired edge profile. In some embodiments, the shaping path includes two or more passes, with each pass extending between the start point and the end point. During the first pass, the processing head 102 delivers a processing stream to pierce the workpiece 106 to detach at least a portion of the part from the workpiece 106 (e.g., cut away the part from the workpiece). After the first pass, the edge of the part at which the cut was made may be substantially right angled (i.e., 90 degrees). During the second and any subsequent passes, the processing stream shapes the edge of the part at which the initial cut was made such that the desired edge profile is achieved. Thus, the edge at which the part is cut/detached from the workpiece 106 from the first pass can be the same as the edge at which shaping is performed during the second pass and any subsequent pass. In alternative embodiments, the part is provided without any additional cutting required, in which the case the shaping path is a single-pass operation where the start point and the end point of the shaping path indicate the edge at which shaping to the desired profile is needed.

At step 204, the material processing system 100 (e.g., the processor 108 and/or the power supply 116 of the material processing system 100) determines a set of one or more operating parameters to produce and controllably impinge the processing stream (by the processing head 102) about the edge of the part to execute the shaping path from the start point to the end point, either in a multi-pass (e.g., two-pass) shaping path or a single-pass shaping path. The set of operating parameters can include at least one of the height of the processing head 102 above the surface of the workpiece 106 (e.g., by adjusting the height controller 110), an energy density of the processing stream generated by the processing head 102, a speed of the processing head 102 along the shaping path, and a lateral offset of the shaping path relative to the edge of the part (e.g., about 0.254 mm [0.01 inch] to about 25.4 mm [1 inch] depending on the shape thickness and angle). In some embodiments, the set of parameters is determined based on at least one of a material type or a thickness of the workpiece while taking into consideration the desired edge profile that needs to be achieved. For example, in a plasma arc processing approach, during the second or any subsequent pass (or in a single-pass shaping operation), the operating parameter(s) of a plasma arc torch system 100 can be configured to controllably bend a low-density plasma arc (e.g., a plasma arc with an energy density substantially lower than that of a plasma arc used to cut/sever the workpiece) emitted by the torch head 102 such that the bent arc removes the most material on/from the top portion of the part, thereby achieving a beveled, chamfered or scooped edge profile. For example, a low-density plasma arc can have an energy density of about 25% of the energy density associated with a plasma arc used to cut a workpiece. As another example, in a laser processing approach, during the second or any subsequent pass (or in a single-pass shaping operation), the operating parameter(s) of a laser processing system 100 are configured to generate a laser beam that selectively melts a top portion of the edge of the part, thereby achieving a beveled, chamfered or scooped edge profile. In some embodiments, the first pass and the following pass(es) use the same set of consumables but with different settings of one or more parameters, including cut height, speed, lateral offset, input power density, gas pressure, gas mixture, controlled power profile and pressure profile, etc.

In some embodiments, in a multi-pass (e.g., two-pass) shaping path, one or more of these operating parameters are different between the first pass and the second pass for executing different functions during the passes. More specifically, for the first pass the operating parameter(s) are configured to sever the part from the workpiece 106, thereby dimensionally forming the edge of the part (e.g., as a right-angled edge), and for the second (and any subsequent) pass the operating parameter(s) are configured to shape the same edge of the part from the first pass (e.g., the right-angled edge from the first pass) to achieve the desired profile. In some embodiments, in a two-pass operation, the height of the processing head 102 relative to the part during the first pass is less than the height of the processing head 102 relative to the part during the second pass (e.g., the processing head is spaced farther away from the part during the second pass), thereby decreasing the energy density of the processing stream impingement during the second pass. In some embodiments, in a multi-pass (e.g., two-pass) operation, the speed of the processing head 102 is different among the multiple passes to produce a desired angle and depth associated with the desired edge profile. For example, the speed of the processing head 102 can be faster or slower in the second pass than that of the first pass. Other differences include one or more of different gas pressures, different amperages of current, different lateral offsets of the processing stream center point from the edge, etc. For example, the second pass can introduce a lateral offset at which the processing stream impinges on the part in comparison to the location of impingement of the processing stream in the first pass. In some embodiments, the lateral offset is no larger than twice the diameter of the process gas (e.g. for plasma processing at about 100A, the lateral offset can be less than about 5.08 mm (0.2 inch). In some embodiments, during the second pass at least one of lower current amperage, power density, gas mixture or gas pressure is set in comparison to those set during the first pass. In some embodiments, the height difference and other parameter setting differences among the different passes depend on the cut thickness and bevel angle. For example, for 12.7 mm (1/2 inch) mild steel with about 30 degree bevel, the first-pass parameters include current of about 105A, speed of about 1549 mm/mn (61 inch per minute) cut height of about 3.175 mm (0.125 inch) and no lateral offset. The second-pass parameters include a current of about 105A, speed of about 609.6 mm/mn (24 inch per minute) cut height of about 30.48 mm (1.2 inch). and lateral offset of about 3.81 mm (0.15 inch).

At step 206, the material processing system 100 (via the driver system 120 and the gantry 118) positions the processing head 102 substantially normal to the surface of the workpiece 106. At step 208, the material processing system 100 controllably delivers a processing stream (via the processing head 102) to the edge of the part. The processing stream can be delivered by the material processing system 100 in either a multi-pass (e.g., two-pass) shaping path or a single-pass shaping path from the start point to the end point as described above. The material processing system 100 can generate the processing streams for the multi-pass shaping path or the single-pass shaping path using operation parameter(s) determined for the respective pass(es) to achieve the desired edge profile. In some embodiments, if a two-pass operation is used, the material processing system 100 is adapted to use a set of cutting consumables for performing the cutting operation of the first pass before changing these consumables to a different set of consumables (e.g., gouging or beveling consumables) for performing the edge refinement/shaping operation of the second pass. In alternative embodiments, the same set of consumables is used for all passes, but with different operating parameter settings.

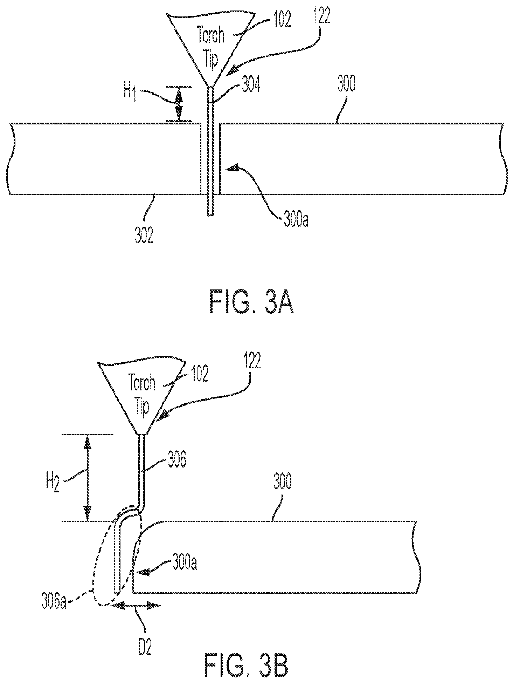

FIGS. 3a and 3b show diagrams visualizing cutting and shaping of a part 300 from a workpiece 302 by a plasma arc torch system 100 in a first pass and a second pass, respectively, using the process 200 of FIG. 2 to produce a chamfered edge, according to some embodiments of the present invention. More specifically, FIG. 3a shows using a plasma arc torch 102 to deliver a plasma arc 304 to the workpiece 302 for cutting (i.e., detaching) the part 300 from the workpiece 302 during a first/initial pass of the shaping path. In some embodiments, the plasma arc 304 impinges substantially normal against the surface of the workpiece 302 during the first pass. In some embodiments, an initial edge 300a is formed on the part 300 after the first pass where the cut is made. The edge 300a can be substantially right-angled, for example. To perform this first-pass cut, the distal tip 122 of the torch 102 is positioned at a first height (H1) from the surface of the workpiece 302, such as about 1.524 mm (0.06 inch) to about 6.35 mm (0.25 inch) above the workpiece 302. The operating parameters associated with generating the plasma arc 304, including the first height H1, can be selected such that the plasma arc 304 flows straight down from the plasma arc torch 102 and penetrates through the workpiece 302 at a substantially perpendicular/normal orientation relative to the surface of the workpiece 302. During the first pass as illustrated in FIG. 3a, the center of the plasma arc 304 as it impinges on the surface of the workpiece is substantially aligned (i.e., no lateral offset) from the edge 300a of the part 300.

FIG. 3b shows using the plasma arc torch 102 to deliver a plasma arc 306 to the part 300 from FIG. 3a for shaping the edge 302a of the part 300 during a second pass of the shaping path, where the first and second passes have substantially the same start and end points. As shown, the second pass of the plasma arc torch 102 shapes the edge 300a of the part 300 to form a chamfered edge. To accomplish this, the plasma arc system 100 positions the torch tip 102 at a second height (H2) above the surface of the part 300, where the second height H2 is greater than the first height H1 used in the first pass. In some embodiments, the center of the plasma arc 306 as it impinges on the surface of the part 300 is laterally offset relative to the edge 300a by a lateral offset distance D2. Such height H2 and lateral offset D2 selections, and optionally combined with specific selection of values for the other operating parameters for producing the plasma arc 306, result in a longer and more pliable/flexible plasma arc 306 in comparison to the plasma arc 304 from the first pass. For example, the plasma arc system 100 can select a higher or slower speed at which the torch tip 102 moves across the part 300 in comparison to the torch speed associated with the first pass of FIG. 3a. This varied torch speed relative to that of the first pass is adapted to reduce the amount of material removed from the edge 300a by the plasma arc 306 to achieve the chamfered edge.

The resulting plasma arc 306 can bend upon impinging on the part 300, curves about the material, and into the void/path of least resistance to produce the smooth chamfered shape at the edge 300a of the part 300. As shown, the distal tip 306a of the plasma arc 306 generally bends in a direction non-normal to the direction of travel of the torch 102 across the part 300. In some embodiments, the plasma gas being emitted from the plasma torch 102 pushes the plasma arc 306 to the edge of and about the part 300 as it flows off and away from the part 300, thereby effectively driving the bend of the plasma arc 306 to shape the edge profile. In some embodiments, the distal tip 306a of the plasma arc 306 comprises about 40% of the length of the plasma arc 306. In some embodiments, the resulting chamfered edge 300a of the part 300 provides a ready-to-paint rounded edge.

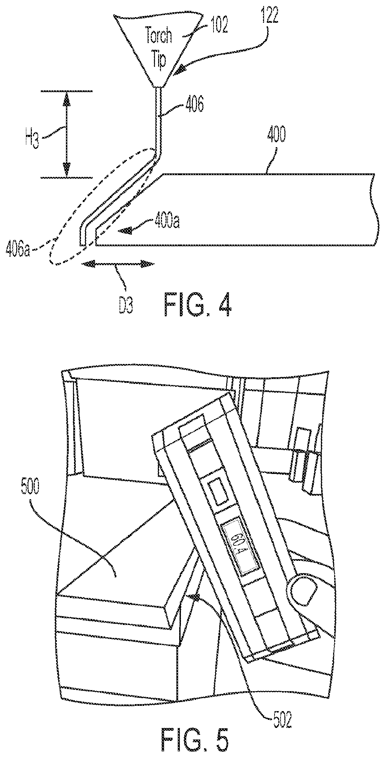

FIG. 4 shows a diagram visualizing shaping an edge 400a of a part 400 by a plasma arc torch system 100 using the process 200 of FIG. 2 to produce a beveled edge, according to some embodiments of the present invention. In some embodiments, the shaping process illustrated in FIG. 4 is a stand-alone shaping operation. In some embodiments, the shaping process illustrated in FIG. 4 represents the second pass of a two-pass operation, where the first pass comprises initially cutting the part 400 from a larger workpiece, similar to the first-pass operation explained above with reference to FIG. 3a. In general, to accomplish the beveled shape at the edge 400a, for the second pass the plasma arc system 100 positions the torch tip 102 at a third height (H3) above the surface of the part 400, where the third height H3 can be greater than the first height H1 used in the first pass that cuts the part 400 from the workpiece. In some embodiments, the center of the plasma arc 406 delivered by the torch 102 as it impinges on the surface of the part 400 is laterally offset relative to the edge 400a by a lateral offset distance D3. Such height H3 and lateral offset D3 selections, and optionally combined with selection of values for other operating parameters for producing the plasma arc 406, drive the plasma arc 406 down and off the edge 400a of the part 400 after penetrating the part 400, thereby eroding the top portion of the part 400 and forming an angled/beveled surface at the edge 400a as the torch 400 moves from the start point to the end point of the shaping path. As shown in FIG. 4, to produce the beveled shape, the distal tip 406a of the plasma arc 406 generally bends in a direction non-normal to the direction of travel of the torch 102 across the part 400. In some embodiments, the distal tip 406a of the plasma arc 406 comprises about 40% of the length of the plasma arc 406.

In some embodiments, the angle of the bevel shape can be controlled by adjusting the lateral offset distance D3, the torch height H3, and/or one or more other operating parameters (e.g., torch speed, arc current, etc.). As an example, the torch speed can be increased to increase (i.e., flatten) the bevel angle by reducing the amount of material removed by the arc 406 to produce a shallower bevel depth and thus angle.

In general, for edge shaping using a plasma arc system 100, any one of the height of the plasma arc torch relative to the part (e.g., H2 and H3 of FIGS. 3b and 4, respectively), the lateral offset from the edge of the part (e.g., D2 and D3 of FIGS. 3b and 4, respectively) or values of one or more other operating parameters can be adjusted to achieve the desired edge profile. In some embodiments of a shaping operation after the part is already cut, the height of the plasma arc torch relative to the part (e.g., H2 or H3) is set to enable generation of a plasma arc density of about 25% of the energy density associated with a plasma arc for cutting/severing the same workpiece (e.g., the energy density of the plasma arc used during the first cutting pass). In some embodiments, the lateral offset (e.g., D2 or D3) can be located within about 25.4 mm (1 inch) from the edge of the part. In some embodiments, the plasma arc is laterally offset from the edge of the part by at least about 10% of a width of the plasma arc. In some embodiments, to develop a rounder edge for a chamfered profile in comparison to a beveled profile (e.g., less material removed in a chamfered profile), the process parameters are adjusted to produce a lower current process and a higher cut speed to reduce the amount of material removed.

FIG. 5 shows an exemplary part 500 shaped using the process 200 of FIG. 2 to produce a beveled edge 502, according to some embodiments of the present invention. The part 500 comprises a plate of steel that is about 9.52 mm (3/8 inch) thick. The beveled angle is about 60 degrees at the edge 502 of the part 500. In some embodiments, to produce the beveled edge 502 utilizing a plasma arc torch system 100, the part 500 is first cut from a larger workpiece using the first-pass operation described above in detail with reference to FIG. 3a. The edge 502 of the part 500 is then refined to have the beveled profile using the second pass operation described above in detail with reference to FIG. 4.

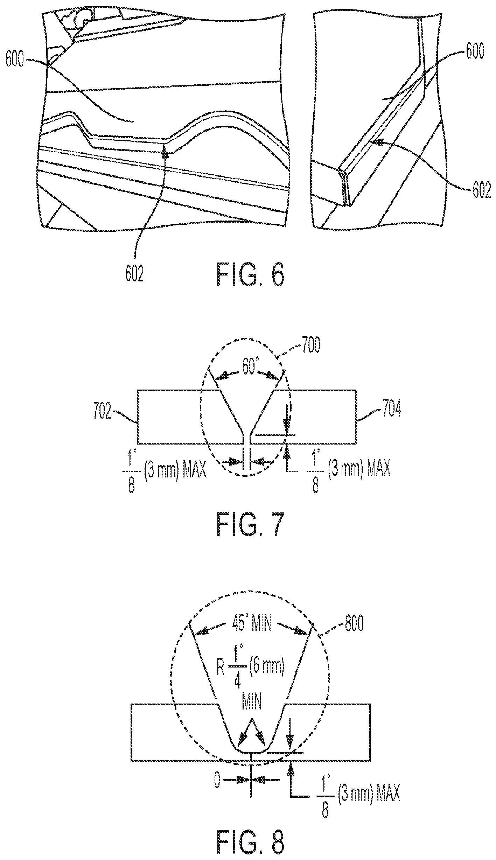

FIG. 6 shows an exemplary part 600 shaped using the process 200 of FIG. 2 to produce a chamfered edge 602, according to some embodiments of the present invention. The part 600 comprises a plate of steel that is about 9.52 mm (3/8 inch) thick. In some embodiments, to produce the chamfered edge 602 utilizing a plasma arc torch system 100, the part 600 is first cut from a larger workpiece using the first-pass operation described above in detail with reference to FIG. 3a. The edge 602 of the part is then refined to have the chamfered profile using the second pass operation described above in detail with reference to FIG. 3b.

In some embodiments, the process 200 described above for producing a beveled edge profile on a part can be easily adapted to produce other related bevel shapes, such as a V-bevel or a U-bevel. FIG. 7 shows an exemplary V-bevel profile 700 processed by a plasma arc torch system 100 on a workpiece, according to some embodiments of the present invention. This profile 700 can be achieved by repeatedly applying the multi-pass process 200 explained above with reference to FIG. 3a (first pass operation) and FIG. 4 (second pass operation) on two parts 702, 704, where a mirror-imaged bevel cut is generated on the edge of each of the parts 702, 704. FIG. 8 shows an exemplary U-bevel profile 800 processed by a plasma arc torch system 100 on a workpiece, according to some embodiments of the present invention. For the U-bevel 800 of FIG. 8, which is a 9.52 mm (3/8 inch) U-bevel, the bending of the plasma arc is less than the V-bevel 700 of FIG. 7. In some embodiments, to produce the U-bevel profile 800, the values of one or more operating parameters are set between those associated with a cut and those associated with a bevel. For example, the torch tip height can be selected to be between a height associated with a cut and a height associated with a bevel so that the bending of the resulting plasma arc is also in between. In some embodiments, the operating parameters for the 9.52 mm (3/8 inch) U-bevel include a current of about 75A, speed of about 952.5 mm/mn (37.5 inch per minute) torch tip height of about 15.24 mm (0.6 inch), and lateral offset of about 2.79 mm (0.11 inch).

As another example, to produce a 19.05 mm (33/4 inch) U-bevel profile at the edge of a part, a four-pass processing operation can be used to cut/remove materials to achieve this profile. During the first pass, a steel workpiece is completely cut/severed to generate the desired part. Parameters associated with this initial cut include an operating current of about 105A, a torch height of about 2.54 mm (0.1 inch), and a cut speed of about 838.2 mm/ mn (33 inch per minute). During the subsequent three passes, one or more operating parameters are successively adjusted to shape the part into the desired profile. For instance, for the subsequent three passes, the operating current can remain at about 105A, the torch height can be set to about 15.24 mm (0.6 inch), and the torch speed can be set to about 508 mm/mn (20 inch per minute). In addition, for the subsequent three passes, the lateral offset of the torch head can be successively increased for every pass from about 2.54 mm (0.1 inch) during the second pass, to about 3.81 mm (0.15 inch) during the third pass, and then to about 5.08 mm (0.2 inch) for the fourth pass.

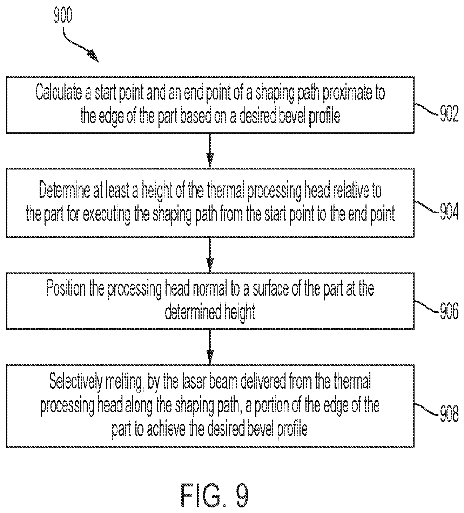

FIG. 9 shows an exemplary computerized process 900, adapted from the computerized process 200 of FIG. 2, for shaping an edge of a part to be cut from a workpiece 106 using a laser cutting system 100, according to some embodiments of the invention. Similar to a plasma arc torch system, the laser cutting system 100 can shape an edge of a part cut from a workpiece 106 to achieve a user desired profile, such as a beveled edge profile, a scooped edge profile or a chamfered edge profile.

As shown in FIG. 9, the process 900 starts at step 902 with the laser cutting system 100 (e.g., the processor 108 and/or the power supply 116 of the laser cutting system 100) calculating a start point and an end point of a shaping path proximate to the edge of the part to achieve a desired edge profile. In some embodiments, the shaping path includes multiple passes (e.g., two passes), with each pass extending between the start point and the end point. During the first pass, the laser cutting head 102 delivers a laser beam to pierce the workpiece 106 to detach at least a portion of the part from the workpiece 106 (e.g., cut away the part from the workpiece). After the first pass, the edge of the part at which the cut was made may be substantially right angled (i.e., 90 degrees). During the second and any subsequent pass, a laser beam is delivered to shape the edge of the part at which the initial cut was made such that the desired edge profile is achieved. In alternative embodiments, the part is provided without any additional cutting required, in which the case the shaping path is a single-pass operation where the start point and the end point of the shaping path indicate the edge at which shaping to the desired profile is needed.

At step 904, the laser cutting system 100 (e.g., the processor 108 and/or the power supply 116 of the laser cutting system 100) determines at least one of a height of the laser cutting head 102 relative to the surface of the part, lateral offset of the laser cutting head 102 from the edge of the part, speed of the laser cutting head 102, gas pressure/gas mixture, or laser power density when executing the shaping path from the start point to the end point, either in a multi-pass shaping path or a single-pass shaping path. For example, during the first pass, the height for setting the laser cutting head 102 is determined to generate a laser beam that penetrates through the workpiece to cut off the part from the workpiece 106, thereby dimensionally forming the edge of the part (e.g., as a right-angled edge). During the second or any subsequent pass (or in a single-pass shaping operation when cutting is not required), the height for setting the laser cutting head 102 is determined to generate a laser beam that selectively melts a top portion of the edge of the part, thereby achieving a beveled, chamfered or scooped edge profile. In some embodiments, in a two-pass operation, the height of the laser cutting head 102 relative to the part during the first pass is less than the height of the laser cutting head 102 relative to the part during the second pass, thereby decreasing the energy density of the laser beam impingement during the second pass. In some embodiments, in a multi-pass operation, other operating parameters associated with the laser cutting system 100 are also adjusted to achieve the desired edge profile for the part. For example, the second or any subsequent pass can introduce a lateral offset at which the laser beam impinges on the part in comparison to the location of impingement of the processing stream in the first pass. This lateral offset of the laser beam can be at least about 2.54 mm (0.1 inch) from the edge of the part. In some embodiments, the set of operating parameters, including the height of the laser cutting head 102, is determined based on at least one of a material type or a thickness of the workpiece.

At step 906, the laser cutting system 100 positions the laser cutting head 102 normal to the surface of the workpiece 106 at the height determined from step 904. At step 908, the laser cutting system 100 controllably delivers a laser beam via the laser cutting head 102 to selectively melt a portion of the edge of the part to achieve the desired profile at the edge of the part. The laser beam can be delivered by the laser cutting system 100 in either a multi-pass (e.g., two-pass) shaping path or a single-pass shaping path from the start point to the end point as described above. The laser cutting system 100 can generate the laser beams for the multi-pass shaping path or the single-pass shaping path using the operation parameter(s) determined for the respective pass(es) to achieve the desired edge profile. In some embodiments, for both the cutting and shaping operations, the distal tip of the laser beam as it penetrates the workpiece is substantially normal to the surface of the workpiece. That is, even during the second pass where no detachable cutting is required and the laser beam is used instead to shape the edge of the part, the laser beam does not bend but is substantially normal when penetrating the part. In some embodiments, while the laser beam remains straight (i.e., normal to the workpiece surface), the gases emitted from the laser cutting head curve about the edge of the part and flow laterally out and then down off the part about the edge of the part, thereby shaping the edge as desired. In some embodiments, in addition to the cutting head height, other operating parameters are suitably adjusted to achieve the desired edge profile, such as the gas pressure associated with the laser beam. In general, the higher the pressure used, the more material is blown away during edge processing.

In some embodiments, a similar approach described above with respect to the plasma and laser cutting systems is utilized by a liquid jet system for shaping the edge of a part. For example, a multi-pass process can be used by a waterjet processing system to first cut a part from a desired workpiece and then shape the edge of the part during the subsequent pass(es). In some embodiments, the desired shaping can be achieved during the subsequent pass(es) by varying one or more operating parameters of the waterjet processing system, including the speed, torch head height, lateral offset of the torch head relative to the part edge, garnet size, type or amount, and waterjet pressure.

As described herein, the method of the present invention is capable of producing sloped cuts (e.g., beveled, rounded or chamfered cuts) on workpieces with consistent angles and results. These cuts can be efficiently produced using simple process settings and low-cost equipment (e.g., simple X-Y tables and typical consumables) with minimal secondary machining/work involved. In contrast, complex robotics and/or specialized equipment were previously needed to produce the same angled cuts. Thus, the present invention provides an automated, efficient and low-cost solution for generating specific part edge profiles, thereby reducing the need for end users to purchase and maintain expensive 3D cutting solutions. For example, the present invention can produce weld-ready (e.g., beveled) and/or paint-ready (e.g., chamfered or rounded) workpieces using just a straight torch plasma cutting system (e.g., no need for bevel head nor table) and a simple XY table.

## Claims

1. A computer-implemented method for shaping an edge of a part to be cut from a workpiece (106; 302) using a plasma arc torch system comprising a processing head (102) configured to deliver a plasma arc (304), the method being **characterised by**:
calculating (202), by the plasma arc torch system, a start point and an end point of a shaping path proximate to the edge of the part based on a desired edge profile;
determining (204), by the plasma arc torch system, a set of operating parameters for single pass or for multi passes to controllably impinge the plasma arc about the edge of the part to execute the shaping path from the start point to the end point, wherein the set of operating parameters includes at least one of a height of the processing head relative to the part, an energy density of the plasma arc, a speed of the processing head along the shaping path, an offset of the shaping path relative to the edge of the part, and a pressure of the plasma arc;
positioning (206), by the plasma arc torch system, the processing head normal to a surface of the part; and
controllably bending (208) during the second or any subsequent pass or during the single-pass shaping operation the plasma arc at the edge of the part, by the processing head, to shape the desired edge profile using the set of operating parameters determined.

2. The computer-implemented method of claim 1, wherein the desired edge profile comprises one of a beveled edge, a scooped edge or a chamfered edge.

3. The computer-implemented method of claim 1, wherein the controllably bending (208) of the plasma arc comprises bending a distal tip of the plasma arc in a direction non-normal to a direction of travel of the processing head (102) across the workpiece (106; 302),
wherein optionally the distal tip of the plasma arc comprises about 40% of a length of the plasma arc (304).

4. The computer-implemented method of claim 1, wherein
a) the height of the processing head (102) relative to the part for shaping the edge of the part is set to enable generation of an energy density of about 25% of an energy density of a plasma arc usable for cutting the part; and/or
b) the processing head (102) is laterally offset from the edge of the part of the workpiece (106; 302) by at least about 10% of a width of the plasma arc (304).

5. The computer-implemented method of claim 1, wherein the shaping path is located within about 25.4 mm (1 inch) from the edge of the part of the workpiece (106; 302).

6. The computer-implemented method of claim 1, wherein the shaping path comprises a first pass between the start point and the end point and a second pass between the start point and the end point, wherein (i) during the first pass the plasma arc (304) pierces the workpiece (106; 302) to detach at least a portion of the part from the workpiece (106; 302) and (ii) during the second pass the plasma arc shapes the edge of the detached part to achieve the desired edge profile.

7. The computer-implemented method of claim 6, wherein any one or more of the following applies,
a) at least one of the processing head height, energy density, pressure, gas mixture, speed or offset is different between the first pass and the second pass to achieve the desired edge profile;
b) the height of the processing head relative to the part during the first pass is less than the height of the processing head relative to the part during the second pass, thereby decreasing the energy density of the plasma arc impinging on the workpiece during the second pass;
c) the computer-implemented method further comprising producing a desired angle and depth associated with the desired edge profile by controlling a speed of the processing head during the second pass;
d) the computer-implemented method further comprising installing a set of cutting consumables to perform the first pass and installing a different set of consumables to perform the second pass; and
e) the computer-implemented method further comprising employing one set of consumables for both the first and second passes and varying one or more of the operating parameters between the first and second passes to controllably shape the edge of the part.

8. The computer-implemented method of claim 1, wherein determining (204) the set of operating parameters is based on at least one of a material type or a thickness of the workpiece.

## Patentansprüche

1. Computerimplementiertes Verfahren zur Formgebung einer Kante eines aus einem Werkstück (106; 302) zu schneidenden Teils unter Verwendung eines Plasmalichtbogenbrennersystems, das einen Verarbeitungskopf (102) umfasst, der dazu konfiguriert ist, einen Plasmalichtbogen (304) abzugeben, wobei das Verfahren durch Folgendes gekennzeichnet ist:
Berechnen (202), durch das Plasmalichtbogenbrennersystem, eines Startpunkts und eines Endpunkts einer formgebenden Bahn nahe der Kante des Teils basierend auf einem gewünschten Kantenprofil;
Bestimmen (204), durch das Plasmalichtbogenbrennersystem, eines Satzes von Betriebsparametern für einen einzelnen Durchgang oder für mehrere Durchgänge, um den Plasmalichtbogen steuerbar um die Kante des Teils aufzutreffen, um die formgebende Bahn von dem Startpunkt zu dem Endpunkt auszuführen, wobei der Satz von Betriebsparametern mindestens eines von einer Höhe des Verarbeitungskopfs relativ zu dem Teil, einer Energiedichte des Plasmalichtbogens, einer Geschwindigkeit des Verarbeitungskopfs entlang der formgebenden Bahn, einem Versatz der formgebenden Bahn relativ zu der Kante des Teils und einem Druck des Plasmalichtbogens beinhaltet;
Positionieren (206), durch das Plasmalichtbogenbrennersystem, des Verarbeitungskopfs normal zu einer Oberfläche des Teils; und
steuerbares Biegen (208), während des zweiten oder eines beliebigen nachfolgenden Durchgangs oder während des Formungsvorgangs in einem einzelnen Durchgang, des Plasmalichtbogens an der Kante des Teils durch den Verarbeitungskopf, um das gewünschte Kantenprofil unter Verwendung des Satzes der bestimmten Betriebsparameter zu formen.

2. Computerimplementiertes Verfahren nach Anspruch 1, wobei das gewünschte Kantenprofil eine von einer abgeschrägten Kante, einer abgerundeten Kante oder einer abgefasten Kante umfasst.

3. Computerimplementiertes Verfahren nach Anspruch 1, wobei das steuerbare Biegen (208) des Plasmalichtbogens Biegen einer distalen Spitze des Plasmalichtbogens in einer Richtung nicht normal zu einer Bewegungsrichtung des Verarbeitungskopfs (102) über das Werkstück (106; 302) umfasst, wobei optional die distale Spitze des Plasmalichtbogens etwa 40 % einer Länge des Plasmalichtbogens (304) umfasst.

4. Computerimplementiertes Verfahren nach Anspruch 1, wobei
a) die Höhe des Verarbeitungskopfs (102) relativ zu dem Teil zur Formgebung der Kante des Teils dazu eingestellt ist, eine Erzeugung einer Energiedichte von etwa 25 % einer Energiedichte eines Plasmalichtbogens, der zum Schneiden des Teils verwendbar ist, zu ermöglichen; und/oder
b) der Verarbeitungskopf (102) um mindestens etwa 10 % einer Breite des Plasmalichtbogens (304) seitlich von der Kante des Teils des Werkstücks (106; 302) versetzt ist.

5. Computerimplementiertes Verfahren nach Anspruch 1, wobei sich die formgebende Bahn innerhalb von etwa 25,4 mm (1 Zoll) von der Kante des Teils des Werkstücks (106; 302) befindet.

6. Computerimplementiertes Verfahren nach Anspruch 1, wobei die formgebende Bahn einen ersten Durchgang zwischen dem Startpunkt und dem Endpunkt und einen zweiten Durchgang zwischen dem Startpunkt und dem Endpunkt umfasst, wobei (i) während des ersten Durchgangs der Plasmalichtbogen (304) das Werkstück (106; 302) durchstößt, um mindestens einen Abschnitt des Teils von dem Werkstück (106; 302) zu lösen, und (ii) während des zweiten Durchgangs der Plasmalichtbogen die Kante des gelösten Teils formt, um das gewünschte Kantenprofil zu erreichen.

7. Computerimplementiertes Verfahren nach Anspruch 6, wobei ein beliebiges oder mehrere von Folgendem zutreffen:
a) mindestens eines von der Verarbeitungskopfhöhe, der Energiedichte, dem Druck, dem Gasgemisch, der Geschwindigkeit oder dem Versatz unterscheidet sich zwischen dem ersten Durchgang und dem zweiten Durchgang, um das gewünschte Kantenprofil zu erreichen;
b) die Höhe des Verarbeitungskopfs relativ zu dem Teil während des ersten Durchgangs ist geringer als die Höhe des Verarbeitungskopfs relativ zu dem Teil während des zweiten Durchgangs, wodurch die Energiedichte des Plasmalichtbogens, der während des zweiten Durchgangs auf das Werkstück auftrifft, verringert wird;
c) das computerimplementierte Verfahren umfasst ferner Produzieren eines gewünschten Winkels und einer gewünschten Tiefe, die dem gewünschten Kantenprofil zugeordnet sind, durch Steuern einer Geschwindigkeit des Verarbeitungskopfs während des zweiten Durchgangs;
d) das computerimplementierte Verfahren umfasst ferner Installieren eines Satzes von Schneidverbrauchsmaterialien, um den ersten Durchgang durchzuführen, und Installieren eines unterschiedlichen Satzes von Verbrauchsmaterialien, um den zweiten Durchgang durchzuführen; und
e) das computerimplementierte Verfahren umfasst ferner Einsetzen eines Satzes von Verbrauchsmaterialien sowohl für den ersten als auch den zweiten Durchgang und Variieren eines oder mehrerer der Betriebsparameter zwischen dem ersten und dem zweiten Durchgang, um die Kante des Teils steuerbar zu formen.

8. Computerimplementiertes Verfahren nach Anspruch 1, wobei das Bestimmen (204) des Satzes von Betriebsparametern auf mindestens einer von einer Materialart oder einer Dicke des Werkstücks basiert.

## Revendications

1. Procédé mis en œuvre par ordinateur pour façonner un bord d'une pièce devant être coupée à partir d'une pièce à travailler (106 ; 302) en utilisant un système de torche à arc de plasma comprenant une tête de traitement (102) configurée pour délivrer un arc de plasma (304), le procédé étant **caractérisé par** :
le calcul (202), par le système de torche à arc de plasma, d'un point de début et d'un point de fin d'un chemin de façonnage à proximité du bord de la pièce sur la base d'un profil de bord souhaité ;
la détermination (204), par le système de torche à arc de plasma, d'un ensemble de paramètres de fonctionnement pour passe unique ou pour passes multiples pour frapper de manière commandable l'arc de plasma autour du bord de la pièce pour exécuter le chemin de façonnage du point de début au point de fin, dans lequel l'ensemble de paramètres de fonctionnement inclut au moins un parmi une hauteur de la tête de traitement par rapport à la pièce, une densité d'énergie de l'arc de plasma, une vitesse de la tête de traitement le long du chemin de façonnage, un décalage du chemin de façonnage par rapport au bord de la pièce, et une pression de l'arc de plasma ;
le positionnement (206), par le système de torche à arc de plasma, de la tête de traitement normale à une surface de la pièce ; et
la courbure de manière commandable (208) pendant la seconde ou toute passe subséquente ou pendant l'opération de façonnage à passe unique de l'arc de plasma au niveau du bord de la pièce, par la tête de traitement, pour façonner le profil de bord souhaité en utilisant l'ensemble de paramètres de fonctionnement déterminés.

2. Procédé mis en œuvre par ordinateur selon la revendication 1, dans lequel le profil de bord souhaité comprend l'un parmi un bord biseauté, un bord évidé ou un bord chanfreiné.

3. Procédé mis en œuvre par ordinateur selon la revendication 1, dans lequel la courbure de manière commandable (208) de l'arc de plasma comprend la courbure d'une pointe distale de l'arc de plasma dans une direction non normale à une direction de déplacement de la tête de traitement (102) à travers la pièce à travailler (106 ; 302), dans lequel éventuellement la pointe distale de l'arc de plasma comprend environ 40 % d'une longueur de l'arc de plasma (304).

4. Procédé mis en œuvre par ordinateur selon la revendication 1, dans lequel
a) la hauteur de la tête de traitement (102) par rapport à la pièce pour façonner le bord de la pièce est réglée pour permettre la génération d'une densité d'énergie d'environ 25 % d'une densité d'énergie d'un arc de plasma utilisable pour couper la pièce ; et/ou
b) la tête de traitement (102) est décalée latéralement par rapport au bord de la pièce de la pièce à travailler (106 ; 302) d'au moins environ 10 % d'une largeur de l'arc de plasma (304).

5. Procédé mis en œuvre par ordinateur selon la revendication 1, dans lequel le chemin de façonnage est situé à moins d'environ 25,4 mm (1 pouce) à partir du bord de la pièce de la pièce à travailler (106 ; 302).

6. Procédé mis en œuvre par ordinateur selon la revendication 1, dans lequel le chemin de façonnage comprend une première passe entre le point de début et le point de fin et une seconde passe entre le point de début et le point de fin, dans lequel (i) pendant la première passe l'arc de plasma (304) perce la pièce à travailler (106 ; 302) pour détacher au moins une partie de la pièce à partir de la pièce à travailler (106 ; 302) et (ii) pendant la seconde passe l'arc de plasma façonne le bord de la pièce détachée pour obtenir le profil de bord souhaité.

7. Procédé mis en œuvre par ordinateur selon la revendication 6, dans lequel un ou plusieurs quelconque de ce qui suit s'applique,
a) au moins un élément parmi la hauteur de tête de traitement, la densité d'énergie, la pression, le mélange de gaz, la vitesse ou le décalage est différent entre la première passe et la seconde passe pour obtenir le profil de bord souhaité ;
b) la hauteur de la tête de traitement par rapport à la pièce pendant la première passe est inférieure à la hauteur de la tête de traitement par rapport à la pièce pendant la seconde passe, diminuant ainsi la densité d'énergie de l'arc de plasma frappant sur la pièce à travailler pendant la seconde passe ;
c) le procédé mis en œuvre par ordinateur comprenant en outre la production d'un angle et d'une profondeur souhaités associés au profil de bord souhaité en commandant une vitesse de la tête de traitement pendant la seconde passe ;
d) le procédé mis en œuvre par ordinateur comprenant en outre l'installation d'un ensemble de consommables de coupe pour réaliser la première passe et l'installation d'un ensemble différent de consommables pour réaliser la seconde passe ; et
e) le procédé mis en œuvre par ordinateur comprenant en outre l'emploi d'un ensemble de consommables pour à la fois les première et seconde passes et la variation d'un ou plusieurs des paramètres de fonctionnement entre les première et seconde passes pour façonner de manière commandable le bord de la pièce.

8. Procédé mis en œuvre par ordinateur selon la revendication 1, dans lequel la détermination (204) de l'ensemble de paramètres de fonctionnement est basée sur au moins un élément parmi un type de matériau ou une épaisseur de la pièce à travailler.
